# EUROPÄISCHE PATENTANMELDUNG

(11) **EP 0 875 967 A2**
(43) Veröffentlichungstag der Anmeldung: **04.11.1998**
(21) Anmeldenummer: 98250114.0
(22) Anmeldetag: 27.03.1998
(51) Int. Cl.: H01S 3/06, H01S 3/07

(54) **LASERVERSTÄRKER**

(30) Priorität: 04.04.1997 DE 19713836
(71) Anmelder: Laser- und Medizin-TechnologieGGmbH Berlin, 12207 Berlin (DE)
(72) Erfinder: Müller, Gerhard, Prof. Dr.-Ing., Dr. h.c., 14129 Berlin (DE)
(74) Vertreter: Christiansen, Henning, Dipl.-Ing.

(57) **Zusammenfassung**

Radial abstrahlender scheibenförmiger Laserverstärker (22), mit einer zentralen Ausnehmung (22.2) im Lasermedium zur Einstellung einer über einen vorgegebenen Bereich des äußeren Scheibenumfangs gleichmäßigen und im wesentlichen stationären Intensitätsverteilung der Laserstrahlung (L).

## Beschreibung

Die Erfindung betrifft einen Laserverstärker gemäß dem Oberbegriff des Anspruchs 1 und eine Laseranordnung unter Einsatz eines solchen.

Aus der DE-A-29 51 000 ist das Prinzip eines stirnflächengekühlten und radial abstrahlenden Scheibenlasers grundsätzlich bekannt.

Die technische Realisierung eines derartigen Laserverstärkers wird durch einige Probleme erschwert. Insbesondere wurde festgestellt, daß die zirkulär abgestrahlte Laserstrahlung über den Umfang der Lasermediums statistische Fluktuationen der Intensität aufweist, die die praktischen Einsatzmöglichkeiten erheblich einschränken.

Die Ursache dafür wird primär in folgendem gesehen: Im Zentrum der Kreisscheibe findet ein gegenüber den Randzonen beschleunigter Abbau der Besetzungsinversion statt, die sich aber aufgrund der statistischen Natur des Laservorganges nicht exakt zentralsymmetrisch ausformt. Das hat zur Folge, daß die entstehende Laserstrahlung ebenfalls nicht zylindersymmetrisch abgestrahlt wird, sondern daß es temporär bevorzugte Abstrahlrichtungen gibt, was für eben diese Abstrahlrichtungen im zentralen Bereich das Lasermediums einen weiter beschleunigten Abbau der Besetzungsinversion bedingt. Infolgedessen werden nunmehr andere Abstrahlrichtungen verstärkungsmäßig bevorzugt, in denen sich dann Intensitätsmaxima ausbilden usw..

Dieses Phänomen wird vermutlich weiterhin dadurch verstärkt, daß an der Umfangsfläche zur Umgebung hin, bedingt durch den dort vorliegenden Brechungsindexunterschied, sogenannte "whispering gally modes" angeregt werden, die radiär um die Umfangsfläche umlaufen und ebenfalls zu einer zufälligen Variation des Verstärkungsprofils und damit zu Intensitätsfluktuationen führen.

Der Erfindung liegt deshalb die Aufgabe zugrunde, einen Laserverstärker der gattungsgemäßen Art mit verbesserten Gebrauchswerteigenschaften, insbesondere einer verbesserten räumlichen und zeitlichen Intensitätsverteilung der Laserstrahlung, zu schaffen.

Die Aufgabe wird durch die im Anspruch 1 angegebenen Merkmale gelöst.

Die Erfindung schließt den Gedanken ein, den Zantralbereich des scheibenförmigen Lasermediums so auszubilden, daß dieser nicht länger als Quelle der nachteiligen Intensitsätsfluktuationen wirken kann. Aus der obigen theoretischen Betrachtung ergibt sich dann weiter der Gedanke, diesen Bereich so auszubilden, daß dort kein beschleunigtre Abbau der Besetzungsinversion stattfinden kann. Dies wiederum ist durch Bildung einer Ausnehmung im Lasermedium realisierbar, die wahlweise durch ein nicht laserfähiges Material ausgefüllt sein kann.

In einer bevorzugten Ausführung dieses Gedankens wird das tellerförmige Lasermaterial mit einer zentralen kegelförmigen Bohrung versehen und zudem die äußere Mantelfläche kegelförmig angeschliffen, wobei der Kegelwinkel sowohl der inneren Bohrung wie der äußeren Mantelfläche im wesentlichen dem Brewsterwinkel des Materials für die Wellenlönge der zu erzeugenden Laserstrahlung entspricht.

In einer weiteren Ausführung des Erfindungsgedankens wird die zentrale Ausnehmung zylindrisch ausgeführt und mit dem (undotierten) Wirtsmaterial des laseraktiven Mediums im optischen Kontakt aufgefüllt. Ebenso wird die äußere Umfangsfläche des Lasermediums zylindrisch belassen, jedoch ein zusätzlicher Kreisring aus dem gleichen, nicht laseraktiven Wirtsmaterial im optischen Kontakt angepaßt.

In einem bevorzugten Ausführungsbeispiel besteht das laseraktive Material aus Nd:YAG (neodym-dotiertem Yttrium-Aluminium-Granat) und das Füllmaterial der zentralen Bohrung bzw. das Material des Kreisringes aus undotiertem YAG.

Die Mantelfläche eines derartigen scheibenförmigen Lasermediums ("Tellerlasers") kann sodann direkt verspiegelt werden, um damit einen radialsymmetrisch abstrahlenden Laserteller herzustellen. Alternativ ist das Vorsehen eines separat gebildeten Resonatorspiegels möglich.

In für bestimte Einsatzzwecke sinnvoller Weiterführung des Erfindungsgedankens kann die Umfangsfläche auch über einen bestimmten Bereich (bevorzugt bis zu 180") total verspiegelt sein, um dadurch einen Tellerlaser mit eingeschränktem Abstrahlwinkel - beispielsweise einer 180°-Abstrahlungscharakteristik - in einer Ebene zu erhalten.

In einer anderen zweckmäßigen Weiterführung des Erfindungsgedankens wird ein primär radial abstrahlender Tellerlaser zentrisch in eine sogenannte AXICON-Optik eingesetzt, um die 360°-Abstrahlung in ein im wesentlichen axial ausgerichtetes Strahlenbündel zu konvertieren.

Soweit für den jeweiligen Einsatzbetrieb notwendig, kann ein derartiger Scheiben- oder Tellerlaser mit einer Stirnflächenkühlung nach dem Stand der Technik betrieben werden.

Vorteilhafte Weiterbildungen der Erfindung sind im übrigen in den Unteransprüchen gekennzeichnet bzw. werden nachstehend zusammen mit der Beschreibung bevorzugter Ausführungen der Erfindung anhand der Figuren näher dargestellt. Es zeigen:
- Figur 1: die Prinzipdarstellung eines Tellerlasers mit torisch ausgebildetem Resonator,
- Figur 2: eine schematische Querschnittsdarstellung des Lasermediums gemäß einer Ausführungsform der Erfindung,
- Figur 3: eine schematische Querschnittsdarstellung des Lasermediums gemäß einer weiteren Ausführungsform,
- Figur 4: eine Weiterbildung der in Fig. 3 gezeigten Ausführungsform in Draufsicht und
- Figur 5: eine Laseranordnung gemäß einer weiteren Ausführungsform der Erfindung.

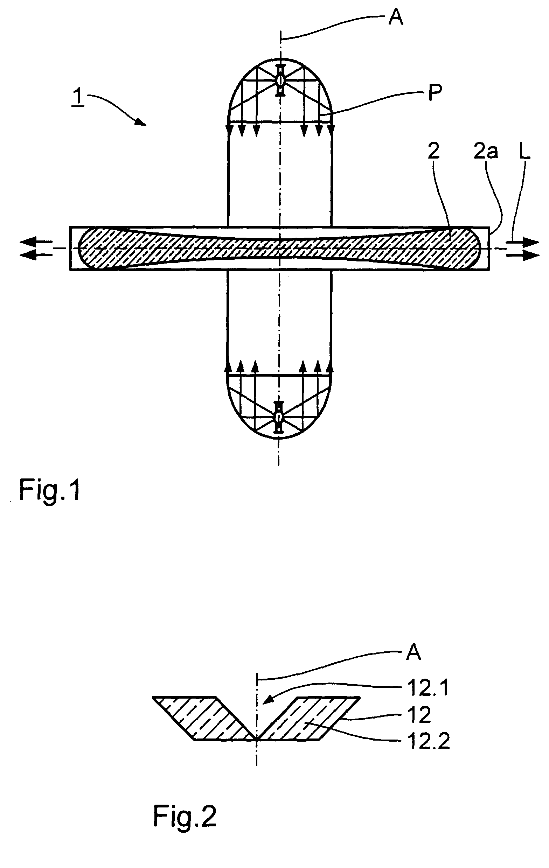

Dabei zeigt Fig. 1 das Grundprinzip einer Tellerlaseranordnung 1 mit einem Laserverstärker 2 und einer optischen Pumpeinrichtung 3 an den Stirnseiten zur Einstrahlung von Pumpstrahlung P längs der Symmetrieachse A des Laserverstärkers, wobei der Resonator mit konvexer Umfangsfläche torisch ausgebildet ist. Die Laseranordnung 1 emittiert durch einen halbdurchlässigen Ringspiegel 2a radial die Laserstrahlung L.

Fig. 2 zeigt in einem die Symmetrieachse A enthaltenden Querschnitt ein Lasermedium 12, das mit einer kegelförmigen zentralen Ausnehmung 12.1 und einer mit gleichem Kegelwinkel (dem Brewster-Winkei für die Laserstrahlung des Materials) gegenüber der Symmetrieachse geneigten Umfangsfläche 12.2 geformt ist.

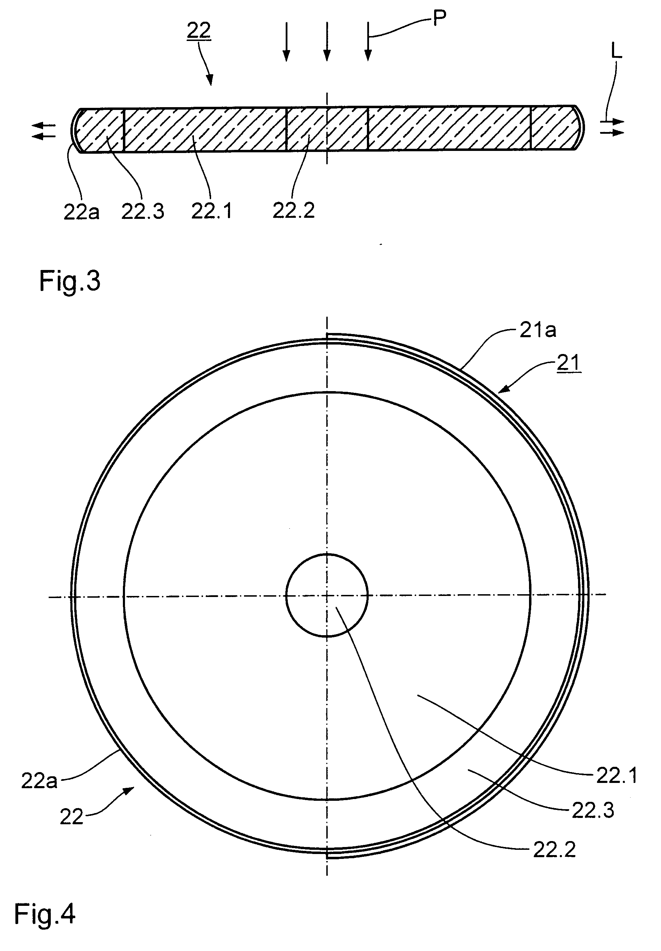

Fig. 3 zeigt einen Laserresonator 22, der aus einem kreiszylindrischem Ring 22.1 aus verstärkendem bzw. laserfähigem Material (z.B. Nd:YAG) und einer zentralen Kreisscheibe 22.2 und einem peripheren Ring mit konvex ("torisch") geformter Umfangsfläche 22.3 aus undotiertem, nicht-verstärkendem Wirtsmaterial (z.B. YAG) zusammengesetzt ist sowie eine Umfangsflächenverspiegelung 22a des peripheren Ringes 22.3 aufweist. Die Pumpstrahlung ist wieder mit P und die emittierte Laserstrahlung mit L bezeichnet.

Fig. 4 zeigt eine Draufsicht auf eine Laseranordnung 21, die aus einem Tellerlaser 22 gemäß Fig. 3 besteht, welcher zur Hälfte seiner Umfangsfläche mit einem 100%-Spiegel 21a versehen ist. Die Komponenten des Tellerlasers 22 sind oben unter Bezugnahme auf Fig. 3 beschrieben.

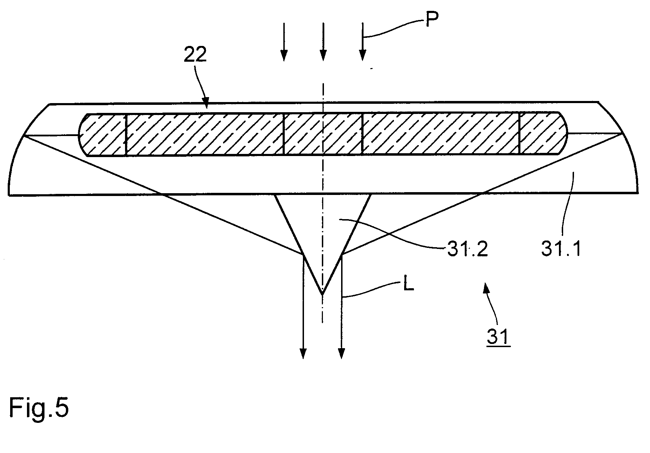

Fig. 5 zeigt schematisch eine Laseranordnung 31, die durch Unterbringung des Laserresonators 22 gemäß Fig. 3 in einer sogenannten Axicon-Anordnung gebildet ist. Mit Ziffer 31.1 ist ein parabolisch toroider Fangspiegelring und mit Ziffer 31.2 ein zentrischer kegliger Vereinigungsspiegel der Ablenkanordnung bezeichnet. Auch hier ist die Pumpstrahlung mit P bezeichnet, und die primäre, radial gerichtete laserstrahlung ist mit L1 und die durch den Fangspiegelring 31.1 und den Vereinigungsspiegel 31.2 zweifach abgelenkte und dadurch im wesentlichen achsenparallel gemachte Laserstrahlung mit L2 bezeichnet.

Die Erfindung beschränkt sich in ihrer Ausführung nicht auf die vorstehend angegebenen bevorzugten Ausführungsbeispiele. Vielmehr ist eine Anzahl von Varianten möglich, welche von der dargestellten Lösung auch in anders gearteter Ausführung Gebrauch machen.

So muß zur Ausfüllung der zentralen Ausnehmung und/oder zur Bildung des das Lasermedium umgebenden Ringes nicht notwendigerweise das Wirtsmaterial des Lasermediums eingesetzt werden, sondern es kann auch anderes optisch, mechanisch und thermisch paßfähiges Material verwendet werden.

## Patentansprüche

1. Radial abstrahlender scheibenförmiger Laserverstärker (12; 22), **gekennzeichnet durch** eine zentrale Ausnehmung (12.1; 22.2) im Lasermedium (12; 22.1) zur Einstellung einer über einen vorgegebenen Bereich des äußeren Scheibenumfangs gleichmäßigen und im wesentlichen stationären Intensitätsverteilung der Laserstrahlung (L).

2. Laserverstärker nach Anspruch 1, **gekennzeichnet durch** die Ausführung der zentralen Ausnehmung (12.1) und/oder des scheibenförmigen Lasermediums (12) in Form eines Kegels bzw. Kegelstumpfes mit einem Kegelwinkel, der im wesentlichen gleich dem Brewster-Winkel des Lasermediums bei der Wellenlänge der Laserstrahlung (L) ist.

3. Laserverstärker nach Anspruch 1, **dadurch gekennzeichnet**, daß die zentrale Ausnehmung mit einem nichtlaserfähigen Material (22.2) mit im wesentlichen den gleichen optisch-mechanischen und thermischen Eigenschaften wie denen des Lasermediums (22.1), insbesondere mit dem undotierten Grundmaterial des Lasermediums, ausgefüllt und/oder ein das Lasermedium umgebender Ring (22.3) aus solchem Material vorgesehen ist.

4. Laserverstärker nach einem der vorhergehenden Ansprüche, **gekennzeichnet durch** die Ausformung als flacher Hohlzylinder, wobei dessen äußerer Umfangsfläche mindestens über einen Teil des Umfangs eine kreiszylindrische Resonatorspiegelfläche zugeordnet ist.

5. Laserverstärker nach einem der Ansprüche 1 bis 3, **gekennzeichnet durch** eine konvexe Ausformung der äußeren Umfangsfläche, wobei dieser eine sich mindestens über einen Teil ihres Umfangs erstreckende Resonatorspiegelfläche (22a) zugeordnet ist.

6. Laserverstärker nach Anspruch 4 oder 5, **dadurch gekennzeichnet**, daß die Resonatorspiegelfläche (22a) durch teildurchlässige Verspiegelung der äußeren Umfangsfläche gebildet ist.

7. Laserverstärker nach einem der Ansprüche 4 bis 6, **dadurch gekennzeichnet**, daß der äußeren Umfangsfläche eine sich über einen Teil ihres Umfangs, insbesondere weniger als 180°, erstreckende vollständig reflektierende Fläche (31a) zugeordnet, insbesondere die äußere Umfangsfläche abschnittsweise vollverspiegelt ist.

8. Laseranordnung mit einem Laserverstärker nach einem der vorhergehenden Ansprüche, **dadurch gekennzeichnet**, daß der Laserverstärker (22) von einer Axicon-Optik (31.1, 31.2) zur Erzeugung eines im wesentlichen axial gerichteten Strahlenbüschels (L2) aus der radial abgestrahlten Laserstrahlung (L1) umgeben ist.

9. Laseranordnung nach Anspruch 8, **dadurch gekennzeichnet**, daß dem Laserverstärker (2; 12; 22) eine Pumpanordnung (3) zugeordnet ist, die im wesentlichen längs seiner Achsenrichtung (A) gerichtete Pumpstrahlung (P) einstrahlt.
